# EUROPEAN PATENT APPLICATION

(11) **EP 4 209 329 A1**
(43) Date of publication of application: **12.07.2023**
(21) Application number: 23150703.9
(22) Date of filing: 09.01.2023
(51) Int. Cl.: B29C 53/04, B44C 3/08, B29B 13/02, F21V 1/26, B29C 51/00, B29C 51/08

(54) **PROCESS FOR WORKING A DECORATIVE ELEMENT FROM ONE BLANK AND KIT FOR CARRYING OUT SUCH PROCESS**

(30) Priority: 07.01.2022 IT 202200000173
(71) Applicant: Slamp S.p.A., 00071 Pomezia(RM) (IT)
(72) Inventor: SADLER, Marc, 00071 Pomezia (RM) (IT)
(74) Representative: Mulas, Chiara

(57) **Abstract**

The present invention relates to a process for working a decorative element (10) starting from one or more blanks (1) made of thermoplastic material, said process comprising the following steps:
a) arranging at least one blank (1) in thermoplastic material in direct contact with the flat heating support surface of a heating plate (20);
b) coupling a lid (30) having a flat surface with the flat support surface of said heating plate (20) by covering said at least one blank (1) in direct contact with said lid (30) for a first period of time on said heating plate (20) heated to a first temperature substantially equivalent to the softening temperature of the thermoplastic material of said at least one blank (1);
c) removing said at least one softened blank (1) from said heating plate (20) after having removed the lid (30);
d) arranging said at least one softened blank (1) on a template (43) and manually working said at least one blank (1) so that it adapts to the shape of said template (43) forming a decorative element (10);
e) removing said decorative element (10) from said template (43). Furthermore, the present invention relates to a kit for working a decorative element (10) starting from one or more blanks (1) made of thermoplastic material.

## Description

The present invention relates to a process for working a decorative element starting from a blank.

More precisely, the present invention relates to a process for working a blank obtained from a sheet made of thermoplastic material to realise a three-dimensional decorative element, in particular for lamps.

According to the state of the art, processes are known for working sheets made of thermoplastic material, such as described for example in the prior art documents US 3,654,017 or US 3,414,181 A. However, such processes do not provide a manual intervention by an operator for working the decorative elements described therein. In particular, the prior art document US 3,654,017 describes a heating step of a sheet made of thermoplastic material inserted in an oven, following which the sheet is deformed, curling back on itself, depending on the time and temperature, obtaining unusual shapes. In this solution, the operator is unable to intervene on the final shape to be given to the article.

The Italian patent n. 102019000005158 in the name of the same Applicant describes a process for realising decorative elements starting from a plastic material surface using a heat source. Once the softening point of the plastic material used has been reached, such surface is worked by hand by an operator to obtain the desired decorative element.

However, through such process, since it provides an almost manual intervention on the material to be formed, unique decorative elements are obtained but it is difficult to maintain uniformity in the produced shapes, since they are different from each other and dependent on the manual skill of the operator who works the material.

The aim of the present invention is to obtain a process for realising a decorative element starting from a blank made of thermoplastic material, wherein there is a manual working intervention, but whose final shape can maintain a uniform quality standard.

In particular, the aim of the present invention is to maintain stable the internal geometry/volume of the elements obtained through the process according to the invention, such as to comply with the technical requirements for the marketing and safety of the product in which it is integrated.

The object of the present invention is a process for the thermoforming and working of a decorative element starting from one or more blanks made of thermoplastic material, said process providing the following steps:
a) arranging at least one blank in thermoplastic material on the flat surface of a heating plate;
b) covering said at least one blank with a lid for a first period of time on said heating plate heated to a first temperature substantially equivalent to the softening temperature of the thermoplastic material of said at least one blank;
c) removing said at least one softened blank from said heating plate after having removed the lid;
d) arranging said at least one softened blank on a template and manually working said at least one blank so that it adapts to the shape of said template forming a decorative element;
e) removing said decorative element from said template.

In particular, according to the invention, after said step d) or after said step e) said process can provide the following step:
f) heating said decorative element with a jet of hot air and working it by hand.

In particular, in said step a) said at least one blank can be arranged in direct contact with the flat heating support surface of said heating plate and in said step b) said lid can have a flat surface and can be coupled with the flat support surface of said heating plate by covering said at least one blank in direct contact with said lid for said first period of time.

Furthermore, according to the invention in said step b) said first period of time can be between 10 and 60 seconds, preferably is equal to 20 seconds.

Still according to the invention, in said step f) a device can be used for delivering a jet of hot air at a temperature between 110° and 200°.

Always according to the invention, said at least one blank can have at least one hole and said template can have at least one pin having a diameter which is smaller than the hole of said at least one blank, and therefore, in said step d), said process can provide the arrangement of the at least one blank on said template by inserting the respective hole on the pin of the template.

In particular, according to the invention, at least two blanks can be provided and before said step a) a blank can overlap the other blank so that the respective holes are coincident.

More particularly, according to the invention, said at least one blank can provide a central portion and a plurality of petals radially departing from said central portion, wherein in said step d) the central portion of each blank can be arranged on the upper portion of the template and each petal adapts to the side surface of the template by laterally overlapping the petals which are adjacent to each other.

Preferably according to the invention, the softening point of the thermoplastic material of said at least one blank can be between 80 °C and 180 °C, in particular it can be around 110°C.

Always according to the invention, before said step a) the following step can be provided:
a1) turning on the heating plate until it reaches the desired temperature, which is substantially equivalent to the softening temperature of the thermoplastic material of the at least one blank.

Furthermore, according to the invention, before said step a) the following step can be provided:
a2) arranging a protective sheet over the support surface of the heating plate.

Still according to the invention, before said step b) this step can be provided:
b1) covering the lower surface of said lid with a protective sheet.

In particular, according to the invention, said protective sheet can be a non-stick paper, in particular it is coated with silicone (silicone rubber), even more particularly it is resistant up to 250 °C.

Furthermore, it is an object of the present invention a kit for carrying out the working process of a decorative element starting from one or more blanks made of thermoplastic material, said kit being characterised in that it comprises:
- at least one blank in thermoplastic material;
- a heating plate having a heating surface, said plate being adapted to reach at least the softening temperature of the thermoplastic material of said at least one blank;
- a lid adapted to cover the heating surface of said heating plate; and
- a support assembly comprising a template for working said at least one blank after it has been softened.

In particular, according to the invention, said lid can have a flat surface adapted to cover and to be removably coupled with the flat heating surface of said heating plate.

More particularly, according to the invention, said support assembly can provide a plate, preferably made of steel, having a mirror-like upper surface on which said template is arranged and coupled.

More particularly, according to the invention, said plate can have at least one hole, the kit can also provide at least one rod adapted to be coupled in its lower portion with the respective hole of said plate and adapted to be coupled at the top with the lower portion of said template.

Preferably according to the invention, said at least one blank can have at least one hole and said template can have at least one pin having a diameter which is smaller than the hole of said at least one blank.

Always according to the invention, said at least one blank can provide a central portion and a plurality of petals radially departing from said central portion.

Still according to the invention, each blank can provide said hole in correspondence with the central portion.

Further according to the invention, a notch can be provided between each petal, in particular having a semi-circular shape.

Furthermore, according to the invention, each blank can have a softening point between 80°C and 180°C, in particular 110°C, preferably it can be made of PET (polyethylene terephthalate), more particularly of PETG (glycolised PET) or of A-PET (Amorphous PET).

Always according to the invention, the thickness of each blank can be between 0.5 mm and 3 mm.

Preferably according to the invention, said lid can have a flat surface, preferably said lid can be made of galvanised iron.

Always according to the invention, said lid can provide a plurality of magnets adapted to be removably coupled with the surface of the heating plate.

Still according to the invention, the lid can have a hooking element, in particular having the form of a ring.

Further according to the invention, the kit can provide at least one protective sheet adapted to cover the surface of said heating plate and/or the lower surface of said lid.

Finally, according to the invention, said protective sheet can be a non-stick paper, in particular it can be coated with silicone, in particular with silicone rubber, even more particularly it can be resistant up to 250°C.

Still it is an object of the present invention a decorative element obtained using the described process.

Furthermore, it is an object of the present invention a lamp, in particular a suspension lamp, comprising the described decorative element.

The invention will now be described for illustrative but not limitative purposes, with particular reference to the drawings of the attached figures, wherein:
Figure 1 shows a top view of an assembly of two blanks overlapping each other for forming a decorative element using the process according to the invention;
Figure 2 shows a front perspective view of a heating plate used in the process according to the invention;
Figures 3a and 3b show perspective views of two softening phases of the assembly of blanks of Figure 1 on the heating plate of Figure 2;
Figure 4 shows a top perspective view of a counter-mold used in the process according to the invention;
Figure 5 shows a perspective view of the lower portion of the counter-mold of Figure 4 and of the heating plate of Figure 2;
Figures 6a and 6b show a front perspective view and a top perspective view of two steps of the process according to the invention wherein the lid of Figure 4 and the heating plate of Figure 2 are being used;
Figure 7 shows a perspective view of a support assembly used in the process according to the invention;
Figure 8a shows a perspective view of the template of the support assembly of Figure 7;
Figure 8b shows a side view of the template of Figure 8a;
Figures 9a and 9b show respectively a top and bottom view of the template of Figure 8a;
Figures 10 - 12 show perspective views of different steps of the process according to the invention while working, after the steps of Figures 6a and 6b, the assembly of softened blanks on the support assembly of Figure 7 for obtaining a decorative element; and
Figure 13 shows a further step of the process according to the invention during a further softening, using a hot air delivery device, of the decorative element obtained through the steps of Figures 10 - 12.

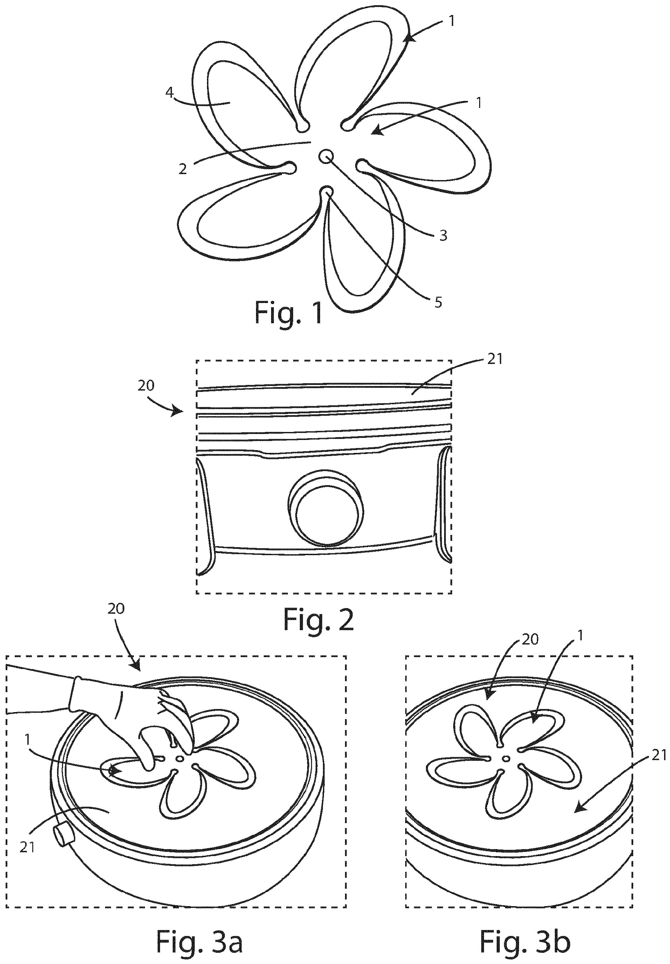

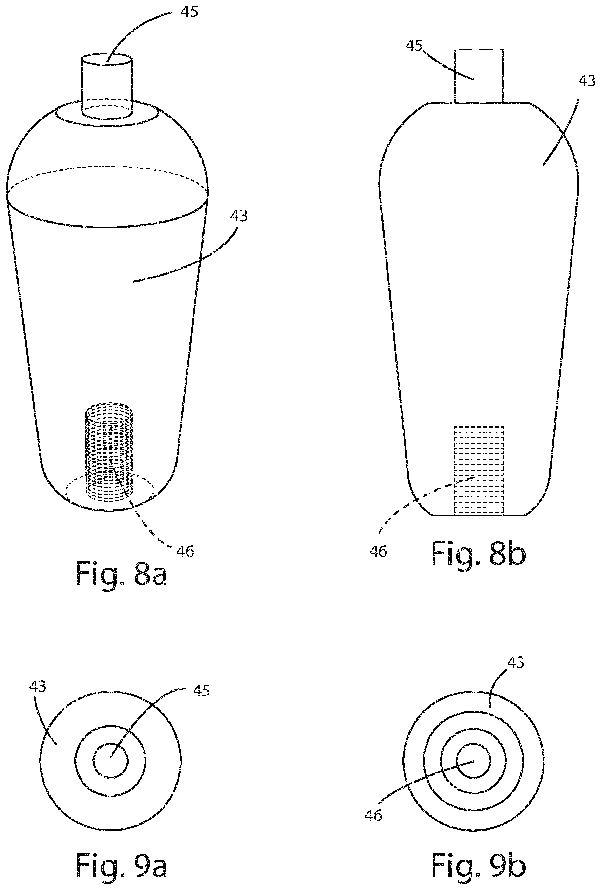

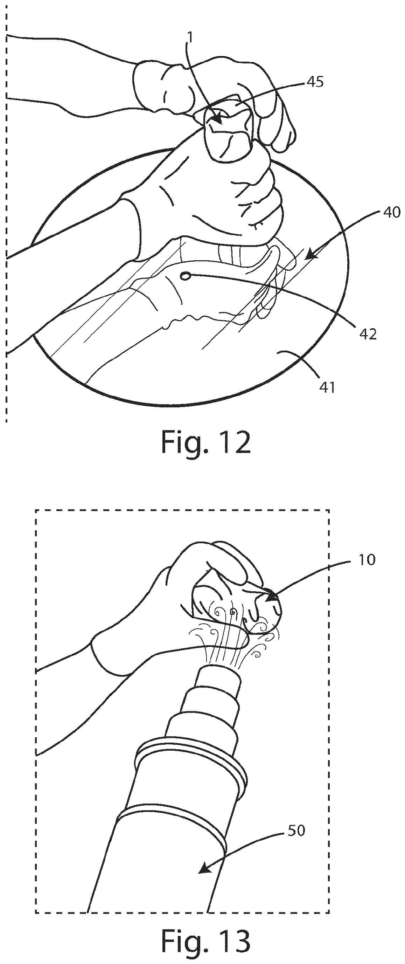

With reference to Figures 1 - 13, it is possible to observe the different steps of the process according to the invention for working one or more blanks 1 (shown in Figure 1) in order to obtain a decorative element 10 (shown in Figure 13).

The obtained decorative element 10 can be used for various purposes, including as a decorative element for lamps, in particular for suspension lamps.

The internal portion of the decorative element 10 can be adapted to house the light source.

As anticipated, Figure 1 shows two overlapping blanks 1. Each blank 1 provides a central portion 2, on which there is a central hole 3, and a plurality of petals 4, in the specific example five petals, which are radially departing from said central portion 2. In particular, each petal 4 is spaced from the adjacent petal by a notch 5 having the shape of a semi-circle. In the specific embodiment, each blank 1 has a flower shape.

Each blank 1 is obtained by cutting or die cutting a sheet made of thermoplastic material, in particular PET (polyethylene terephthalate), more particularly PETG (glycolised PET) or A-PET (Amorphous PET).

The material used for both blanks 1 has a softening point of around 110°C, more generally between 80°C and 180°C.

More particularly, the sheet is made of transparent and/or semitransparent material. Furthermore, preferably a first face of the blank 1 has a prismatic effect, while the other face has a smooth surface effect.

Furthermore, preferably, the sheet from which the blank 1 is obtained has a thickness between 0.5 mm and 3 mm.

Thanks to the coupling of two blanks 1 with each other, depending on the position of the respective faces, it is obtained a Fresnel-type optical effect.

The two blanks 1 overlap each other so that the central hole 3 is coincident. Preferably both blanks 1 have the same number of petals 4 and the same number of notches 5 so that when one blank 1 overlaps the other blank, the position of the notches 5 also coincides.

In other embodiments, not shown here, the process according to the invention can also use a single blank or more than two overlapping blanks, which may also have different shapes.

Referring to Figure 2, a heating plate 20 is shown on which the described pair of blanks 1 will be heated.

Said heating plate 20 has a flat, in particular smooth, surface adapted to be heated to a desired temperature. In particular, the temperature of the heating plate 20 can be manually adjusted. In particular, said heating plate 20 is able to reach a temperature of at least 110°C, more generally between 80°C and 180°C, and to maintain it stable for the time required for the process according to the invention. Generally said stable temperature is reached after about 20 seconds from turning on the heating plate 20, more generally after about 10 - 60 seconds.

The temperature to which said plate 20 is heated is substantially equivalent to the softening temperature of the material of the pair of blanks 1 to be worked on the plate 20.

A protective sheet 21 can be arranged over the support surface of the heating plate 20 to prevent the objects arranged on said plate 20 from sticking thereto.

In particular, such protective sheet 21 is a non-stick paper, in particular of the type used for heating food in the oven. This material is able to resist high temperatures and prevents the materials placed thereon from sticking to the sheet and to the surface of the plate 20. In particular, such paper is coated with silicone (silicone rubber) and is very resistant to high temperatures, in particular up to 220° - 250°C.

Observing now Figures 3a - 3b, it is shown a step of the process according to the invention, wherein the previously described pair of blanks 1 is arranged on the protective sheet 21 arranged over the heating plate 20.

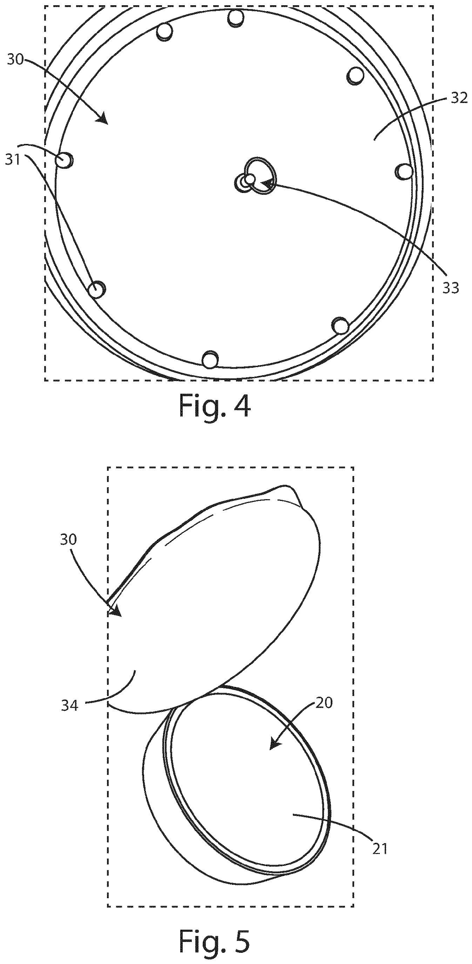

In relation to Figures 4 and 5, it is shown a counter-mold 30 or lid 30 designed for the process according to the invention. Said counter-mold 30 is adapted to maintain stable the temperature reached by the plate 20 and is arranged to overlap the heating plate 20 above the pair of blanks 1 of Figures 3a -3b.

The counter-mold 30 has a flat surface 30, made of galvanised iron, having the shape of the heating plate 20, in particular it has a circular disc shape.

Furthermore, the counter-mold 30 provides a plurality of magnets 31, arranged at the perimeter of the flat surface 30 for being removably coupled with the heating plate 20.

Furthermore, the counter-mold 30 has a hooking element 33, in particular having the shape of a ring, to allow the operator to easily grip the counter-mold 30.

Finally, the lower surface of the counter-mold 30 (as shown in Figure 5) is also covered with a protective sheet 34 made of non-stick material, of the same type as the protective sheet 21 used on the heating plate 20.

Preferably, the counter-mold 30 has a weight of about 2 kg, more generally between 1 and 3 kg, and a diameter of about 31 cm, and a thickness of about 5 mm.

The magnets are preferably made of sintered neodymium. Preferably each magnet 31 has a magnetic remanence Br > 1.18 mT, an intrinsic coercivity HcJ > 955 kA/m and normal coercivity HcB > 868 kA/m, and the maximum energy product (BH)max > 263 kJ/m³.

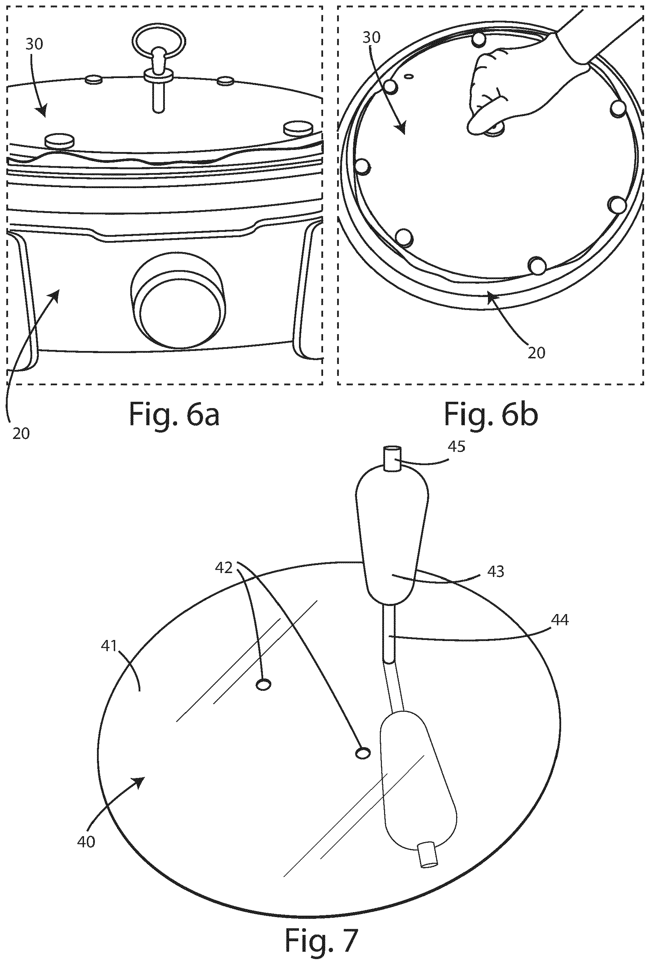

Observing Figures 6a and 6b, the process according to the invention provides the overlapping of the counter-mold 30 on the pair of blanks 1 arranged on the heating plate 20 turned on at a temperature equivalent to the softening temperature of the material used for the blanks 1.

After about 20 seconds, more generally after a time ranging from 10 to 60 seconds, the counter-mold 30 can be removed and the softened blanks 1 can be manually thermoformed.

Thanks to the counter-mold 30, the blanks 1 remain completely stationary, sealed and in a plane position on the heating plate 20, so that during their heating they do not lose their original shape and do not curl back on themselves.

Referring to Figures 7 - 9, it can be observed the support assembly 40 used in the process according to the invention on which the blanks 1, previously heated and softened on the heating plate 20, are worked.

In particular, the support assembly 40 can provide a base element 41. Such base element 41 is a plate, preferably made of steel, which has a mirrored upper surface. Such mirrored surface makes it possible to manually work the blanks and to see also the lower portion of the decorative element 10 which is being formed to check the quality of the thermoformed object properly.

Said base element 41 has a plurality of holes 42, in particular three holes, but it can also have only one or more holes.

The lower portion of a stem or rod 44 is inserted into at least one hole 42, on whose upper end it is coupled a template or mold 43 on which the pair of softened blanks 1 are worked by hand by an operator.

The rod 44 allows the template 43, and therefore the blanks 1 arranged on it, to be sufficiently spaced from the base element 41 to make it possible to work on all sides the decorative element to be formed.

The template 43 has a solid shape, in particular tapered and can have a threaded hole 46 at its bottom for being integral coupled with the rod 44, which also has a threaded upper portion. Furthermore, the template 43 at the top can have a protruding pin 45.

In other embodiments, the template can for example have an elongated cylindrical shape, for working tapered elements.

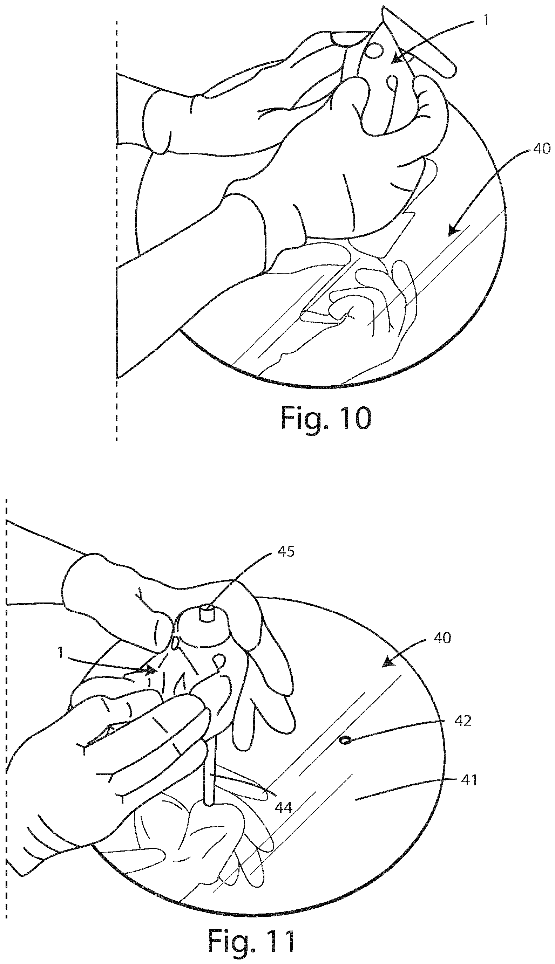

As shown in Figures 10 - 12, the pair of blanks 1, once softened, is arranged on the template 43 of the support assembly 40, in particular by inserting the pin 45 of the mold 43 in the coincident holes 3 of the pair of blanks 1. In particular, the template 43 has at least one pin 45 having a diameter which is smaller than the hole 3 of said at least one blank 1.

In this way the operator can work the petals 4 of the blanks 1 by laterally overlapping them on the template 43, thermoforming the softened blanks 1.

As can be observed from Figures 10 - 12, the operator, wearing a suitable protective gloves, works the blanks by bringing the petals closer together so that they assume the external shape of the mold 43.

Subsequently, the obtained decorative element 10 is cooled for a few seconds at room temperature.

Finally, observing Figure 13, it is shown the last step of the process according to the invention, wherein the decorative element 10 obtained by manually working it, in particular by manual thermoforming, is taken from the template 43 of the support assembly 40. A final heating step can be carried out on such decorative element 10 by means of a hot air delivery device 50, for example a hair dryer.

The decorative element 10 is subjected to a jet of hot air at a temperature between 110°and 200°C for about 5 - 20 seconds and then manually worked again by an operator for the manual thermoforming of the material constituting the decorative element 10, to better define the details, for example the edges, and obtain the desired aesthetic result.

In particular, the hot air jet device 50 has a power of 2000 Watts, is adapted to operate at a temperature between 50 and 600°C, with a continuously adjustable air flow: 650 I/min, with two phases of the fan.

Advantageously, the process according to the invention makes it possible to obtain a decorative element worked by hand, but which preserves some uniform shape characteristics in all the obtained units, preserving a serial quality standard.

Still advantageously, the process and the kit according to the invention make it possible to maintain the internal geometry/volume of the obtained decorative element stable, such as to comply with all the technical requirements for marketing the product, in particular when it is integrated into a lamp.

In particular, in fact it makes it possible to guarantee a minimum space for housing the light source. Furthermore, maintaining the internal dimensions and distances is necessary for a proper cooling flow of the light source and makes it possible the manual intervention for replacing the light source.

In the foregoing the preferred embodiments have been described and variants of the present invention have been suggested, but it should be understood that those skilled in the art will be able to make modifications and changes without thereby departing from the corresponding scope of protection, as defined by the attached claims.

## Claims

1. A process for working a decorative element (10) starting from one or more blanks (1) made of thermoplastic material, said process providing the following steps:
a) arranging at least one blank (1) in thermoplastic material in direct contact with the flat heating support surface of a heating plate (20);
b) coupling a lid (30) having a flat surface with the flat support surface of said heating plate (20) by covering said at least one blank (1) in direct contact with said lid (30) for a first period of time on said heating plate (20) heated to a first temperature substantially equivalent to the softening temperature of the thermoplastic material of said at least one blank (1);
c) removing said at least one softened blank (1) from said heating plate (20) after having removed the lid (30);
d) arranging said at least one softened blank (1) on a template (43) and manually working said at least one blank (1) so that it adapts to the shape of said template (43) forming a decorative element (10);
e) removing said decorative element (10) from said template (43).

2. The process according to the preceding claim, wherein in said step b) said first period of time is between 10 and 60 seconds, preferably equivalent to 20 seconds.

3. The process according to any one of the preceding claims, wherein said at least one blank (1) has at least one hole (3) and wherein said template (43) has at least one pin (45) having a diameter which is smaller than the hole (3) of said at least one blank (1), and wherein said process in said step d) provides the arrangement of the at least one blank (1) on said template (43) by inserting the respective hole (3) on the pin (45) of the template (43).

4. The process according to the preceding claim, wherein at least two blanks (1) are provided and wherein before said step a) a blank (1) overlaps the other blank (1) so that the respective holes (3) are coincident.

5. The process according to any one of the preceding claims, wherein said at least one blank (1) provides a central portion (2) and a plurality of petals (4) radially departing from said central portion (2), wherein in said step d) the central portion (2) of each blank (1) is arranged on the upper portion of the template (43) and each petal (4) adapts to the side surface of the template (43) by laterally overlapping the petals (4) which are adjacent to each other.

6. The process according to any one of the preceding claims, wherein the softening point of the thermoplastic material of said at least one blank (1) is between 80°C and 180°C, in particular it is around 110°C.

7. The process according to any one of the preceding claims, wherein before said step a) it is provided the following step:
a2) arranging a protective sheet (21) over the flat support surface of the heating plate (20).

8. The process according to any one of the preceding claims, wherein before said step b) it is provided the step:
b1) coating the lower surface of said lid (30) with a protective sheet (34).

9. A kit for working a decorative element (10) starting from one or more blanks (1) made of thermoplastic material, said kit being **characterised in that** it comprises:
- at least one blank (1) in thermoplastic material;
- a heating plate (20) having a flat heating support surface, said plate (20) being able to reach at least the softening temperature of the thermoplastic material of said at least one blank (1);
- a lid (30) having a flat surface adapted to cover and to be removably coupled with the flat heating surface of said heating plate (1); and
- a support assembly (40) comprising a template (43) for working said at least one blank (1) after it has been softened.

10. The kit according to the preceding claim, wherein said lid (30) is made of galvanised iron.

11. The kit according to any one of claims 9 or 10, wherein said lid (30) provides a plurality of magnets (31) adapted to be removably coupled with the surface of the heating plate (20).

12. The kit according to any one of claims 9 - 11, wherein the lid (30) has a hooking element (33), in particular having the shape of a ring.

13. The kit according to any one of claims 9 - 12, wherein said support assembly (40) provides a plate (41), preferably made of steel, having a mirrored upper surface on which said template (43) is arranged and coupled.

14. The kit according to the preceding claim, wherein said plate (41) has at least one hole (42), wherein the kit further provides at least one rod (44) adapted to be coupled in its lower portion with the respective hole (42) of said plate (41) and adapted to be coupled at the top with the lower portion of said template (43).

15. The kit according to any one of claims 9 - 14, wherein said at least one blank (1) has at least one hole (3) and wherein said template (43) has at least one pin (45) having a diameter which is smaller than the hole (3) of said at least one blank (1).

16. The kit according to any one of claims 9 - 15, wherein each blank (1) has a softening point between 80°C and 180°C, in particular 110°C, preferably it is made of PET (polyethylene terephthalate), more in particular of PETG (glycolysed PET) or of A-PET (Amorphous PET).

17. The kit according to any one of claims 9 - 16, wherein the thickness of each blank (1) is between 0.5 mm and 3 mm.

18. The kit according to any one of claims 9 - 17, wherein it is provided at least one protective sheet (21; 34) adapted to cover the surface of said heating plate (20) and/or the lower surface of said lid (30).

19. The kit according to the preceding claim, wherein said protective sheet (21; 34) is a non-stick paper, in particular it is coated with silicone, in particular with silicone rubber, even more particularly it is resistant up to 250 °C.
